# EUROPÄISCHE PATENTANMELDUNG

(11) **EP 0 985 894 A2**
(43) Veröffentlichungstag der Anmeldung: **15.03.2000**
(21) Anmeldenummer: 99116022.7
(22) Anmeldetag: 12.08.1999
(51) Int. Cl.: F28D 7/02, F28F 1/08, F02M 31/20

(54) **Kraftstoffkühler**

(30) Priorität: 08.09.1998 DE 29815951 U
(71) Anmelder: Witzenmann GmbH Metallschlauch-Fabrik Pforzheim, D-75175 Pforzheim (DE)
(72) Erfinder: Burkhardt, Carlo Dr., 75331 Grunbach (DE); Herty, Winfried, 75177 Pforzheim (DE); Merkowski, Eduard, 75181 Pforzheim (DE); Rettkowski, Klaus, 75433 Maulbronn (DE)
(74) Vertreter: Blumenröhr, Dietrich Dipl.-Ing.

(57) **Zusammenfassung**

Die Erfindung betriff einen Kühler für Kraftfahrzeuge und insbesondere für den von einem Tank zu einer Verbrennungskraftmaschine und zurück strömenden Kraftstoff, bestehend aus einem im wesentlichen zylindrischen Gehäuse, das von einem ersten Medium im wesentlichen axial durchströmt wird, während ein zweites Medium über zwei separate Anschlüsse einen im Gehäuse verlegten Wellschlauch durchströmt, der als Wendel ausgebildet ist, deren Achse mit der Gehäuseachse übereinstimmt, wobei die Anschlüsse (7, 8, 17, 18) des Wellschlauches (3) in einer oder beiden axialen Stirnseiten (5,6) des Gehäuses (2) angeordnet sind, wobei die Stirnseiten des Gehäuses (2) von jeweils einem am Gehäuse festlegbaren Deckel (5, 6) gebildet sind, und wobei die Deckel die Anschlüsse (7, 8, 9, 10) für Kraftstoff und Kühlmittel tragen.

## Beschreibung

Die Erfindung betrifft einen Kühler für Kraftfahrzeuge und insbesondere für den von einem Tank zu einer Verbrennungskraftmaschine und zurück strömenden Kraftstoff, bestehend aus einem zylindrischen Gehäuse, das von einem ersten Medium im wesentlichen axial durchströmt wird, während ein zweites Medium über zwei separate Anschlüsse einen im Gehäuse verlegten Wellschlauch durchströmt, der als Wendel ausgebildet ist, deren Achse mit der Gehäuseachse übereinstimmt.

Ein derartiger Kraftstoffkühler ist beispielsweise aus DE-PS 34 40 060 bekannt und dient dazu, den Kraftstoff vor dem Eintritt in den Vergaser bzw. in die Einspritzpumpe durch ein geeignetes Kühlmittel herunterzukühlen, um die Verbrennung des Kraftstoffs unter minimaler Schadstofferzeugung zu optimieren.

Der hierbei von dem das zweite Medium darstellenden Kraftstoff durchströmte und in dem Gehäuse des Kraftstoffkühlers wendelförmig verlegte Wellschlauch bietet aufgrund seiner großen Oberfläche hohe Wärmeübergangszahlen, wobei der Wellschlauch außerdem aufgrund seiner Flexibilität dazu in der Lage ist, auftretende Wärmedehnungen ohne nennenswerten Spannungsaufbau zu kompensieren. Hierdurch lassen sich insbesondere auch größere Beanspruchungen an den das Gehäuse des Kühlere durchquerenden Anschlüssen des Wellschlauches, die sich bei den bekannten Kraftstoffkühlern im Bereich der Umfangewandung radial nach außen erstrecken, reduzieren.

Von diesem Stand der Technik ausgehend liegt der vorliegenden Erfindung die Aufgabe zugrunde, den bekannten Kraftstoffkühler hinsichtlich seines Aufbaus und Fertigungsaufwandes zu vereinfachen.

Diese Aufgabe wird erfindungsgemäß dadurch gelöst, daß die Anschlüsse des Wellschlauches in einer oder beiden axialen Stirnseiten des Gehäuses angeordnet sind, und daß die Stirnseiten jeweils von einem am Gehäuse festlegbaren Deckel gebildet sind, welcher die Anschlüsse für Kraftstoff und Kühlmittel trägt. Während also bei den bekannten Kraftstoffkühlern die Wellschlauchanschlüsse im Bereich der gewölbten Umfangswandung angeordnet sind, wodurch das Herstellen einer dichten Verbindung sehr aufwendig ist, sind nunmehr die Wellschlauchanschlüsse für das zweite Medium ähnlich den Anschlüssen für das erste Medium in die ebene von einem Deckel gebildete axiale Stirnseite des Gehäuses verlegt, in der die Durchführung des Anschlusses durch die Gehäusewandung in sehr einfacher Art und Weise erfolgen kann.

Gleichzeitig wird durch diese neuartige Positionierung des Kraftstoffanschlusses auch die Gestaltung des Gehäuses vereinfacht, indem dieses nunmehr eine kontinuierliche zylindrische Umfangswand aufweisen und insbesondere aus einem rohrförmigen Grundkörper bestehen kann, was wesentlich einfacher herzustellen ist, als wenn man Vorkehrungen für radiale Anschlußverbindungen im Bereich der gewölbten Umfangswand des Gehäuses treffen müßte.

Zwar ergeben sich die beschriebenen Vorteile schon dann, wenn nur ein Wellschlauchanschluß an der axialen Stirnseite angeordnet ist; besonders vorteilhaft ist es aber natürlich, beide Wellschlauchanschlüsse an den axialen Stirnseiten anzuordnen, insbesondere an den beiden sich gegenüberliegenden Stirnseiten. In diesem Zusammenhang empfiehlt es sich darüber hinaus, die Wellschlauchanschlüsse beabstandet zur Wendel- und Gehäuseachse und somit außermittig vorzusehen und gleichzeitig auch die Anschlüsse für das erste Medium an den axialen Stirnseiten des Gehäuses und insbesondere beabstandet zur Gehäuseachse anzuordnen.

Die Deckel weisen zweckmäßigerweise einen senkrecht zur Gehäuseachse in Radialrichtung verlaufenden insbesondere scheibenförmigen Innenbereich sowie eine an den rohrförmigen Grundkörper angepaßte und insbesondere das Gehäuse unter Bildung eines Festlegungsbereiches innen oder außen überlappende Außenform auf. Hierdurch ergibt sich der Vorteil, daß der Kühler unabhängig von seiner Größe und Kühlleistung aus immer gleichen oder zumindest fast gleichen Bauteilen aufgebaut sein kann, nämlich nur aus einem rohrförmigen Gehäuse, zwei scheibenförmigen auf das Gehäuse aufsteckbaren und mit Anschlüssen versehenen Deckeln und einem innerhalb des Gehäuses verlegten Wellschlauch.

Diese vereinfachte Bauform führt zu einem wesentlichen Merkmal der vorliegenden Erfindung, welches darin liegt, daß die Tauscherleistung des Kühlers in einfacher Weise durch Änderung der Wellschlauch- und Gehäuselänge variierbar ist, indem man beispielsweise zur Reduzierung der Tauscherleistung das Gehäuse in seiner Axiallänge etwas verkürzt und unter Verwendung des gleichen Deckels, der auch für größere Tauscherleistungen verwendet werden würde, verschließt. Im Gegenzug muß hierbei natürlich auch der Wellschlauch entsprechend gekürzt werden, was aber aufgrund seines kontinuierlichen Aufbaus genauso einfach durchgeführt werden kann.

Insgesamt erhält man folglich einen Kühler mit vereinfachtem Aufbau, dessen Tauscherleistung durch Änderung der Länge von Gehäuse und Schlauch in einfacher Weise skalierbar ist.

Zweckmäßigerweise ist hierzu die Außenform des Gehäuses über die axiale Länge zumindest in vorgegebenen Ablängungsbereichen im wesentlichen gleichbleibend ausgeführt, so daß das Gehäuse unabhängig von seiner axialen Länge durch einen an das Gehäuse angepaßten Deckel mediumdicht ― insbesondere durch Verschweißen oder Verlöten von Gehäuse und Deckel im Festlegungsbereich ― verschließbar ist.

Was den Anschluß des das Gehäuse durchströmenden ersten Mediums betrifft, so liegt eine vorteilhafte Bauform darin, daß der Eintrittabereich des ersten Mediums durch ein insbesondere entlang der Gehäuseachse und durch die Wellschlauchwendel verlaufendes Innenrohr auf die gegeüberliegende Gehäuseseite verlegt wird und das erste Medium ausgehend von dort das Gehäuse durch- und die Wendel umströmt. Hierdurch liegt der Austrittsbereich des ersten Mediums auf der gleichen axialen Stirnseite wie der Anschluß für den Eintrittsbereich, was eine flexible Anpassung an Einbaubedingungen ermöglicht.

Zur Erfüllung solcher Einbaubedingungen kann es auch erforderlich sein, daß unter Anpassung an die bisherigen radialen Orientierungen der Anschlüsse für das zweite Medium die nun vorgeschalgenen stirnseitigen Anschlüsse mit abgewinkelten Leitungsabschnitten versehen werden, um hierdurch letztendlich ebenfalls eine radiale Zu- bzw. Abströmrichtung zu erhalten, ohne die erfindungsgemäßen Vorteile der einfachen Verkürzbarkeit sowie des vereinfachten Aufbaus des Kühlers zu verlieren.

Der erfindungsgemäße Kühler läßt sich insbesondere als Kraftstoffkühler verwenden, bei dem der Kraftstoff vorzugsweise als zweites Medium durch den Wellschlauch strömt und ein Kühlmittel ― wie beispielsweise Wasser oder R 134 a ― als erstes Medium das Gehäuse axial durchströmt und hierbei den Wellschlauch umströmt. Die Vorteile der Erfindung lassen sich aber auch in gleicher Weise erzielen, wenn das Kühlmittel den Wellschlauch durchströmt und der Kraftstoff den Wellschlauch umströmt. Außerdem liegt ein möglicher Anwendungsbereich des Kühlers darin, in Abgasrückführungsleitungen eingebaut zu werden und hierbei das Abgas ― welches auch das erste oder zweite Medium darstellen kann ― durch ein Kühlmittel herunterzukühlen.

Bezüglich der axialen Anschlüsse für das das Gehäuse durchströmende erste Medium, also insbesondere für das Kühlmittel, besteht ein Problem darin, daß bei Einbau von Prallblechen innerhalb des Gehäuse, die zur Umlenkung des ersten Mediums dienen und zur Verbesserung der Tauscherleistung beitragen sollen, eine Vergrößerung des Druckverlusts im Zuströmbereich entsteht, wodurch die das erste Medium antreibende Pumpe in ihrer Leistung vergrößert werden muß. Um diesem großen Druckverlust entgegenzuwirken, empfiehlt es sich, im Übergangsbereich zwischen Anschluß und Gehäuse ein strömungsdurchlässiges Einlegeteil in Form eines Diffusors vorzusehen, das insbesondere aus einem Drahtformteil wie etwa einem Gestricke, einer Drahtwirrlage oder dergleichen gebildet sein kann. Vorzugsweise ist dieser Diffusor, der insbesondere auf der Eingangsseite des Kühlers seine Funktion erfüllt, innerhalb des Kühlers angrenzend an den Kühlmittelanschluß vorgesehen, wobei er in seiner Außenform ― je nach Anforderungen - einerseits lediglich in etwa dem Querschnitt des Anschlusses und andererseits in etwa dem Querschnitt des Kühlergehäuses entsprechen kann. Der Diffusor bewirkt eine optimale Verwirbelung des ersten Mediums und trägt hierdurch aufgrund der besseren Umströmung des Wellschlauchs durch das erste Medium zu einer verbesserten Tauscherleistung bei.

Weitere Merkmale und Vorteile der vorliegenden Erfindung ergeben sich aus der nachfolgenden Beschreibung von Ausführungsbeispielen anhand der Zeichnung; hierbei zeigen
- Figur 1: einen erfindungsgemäßen Kraftstoffkühler in teilweise geschnittener Seitenansicht;
- Figur 2: den Kraftstoffkühler in Vorderansicht;
- Figur 3: eine alternative Kühlerbauform in teilweise geschnittener Seitenansicht;
- Figur 4: den Kühler aus Figur 3 in Vorderansicht;
- Figur 5: eine alternative Bauform eines Kraftstoffkühlers in teilweise geschnittener Seitenansicht und
- Figur 6: einen weiteren Kraftstoffkühler in geschnittener Seitenansicht, der mit Einlegeteilen zur Vergleichmäßigung des Kühlmittelstroms versehen ist.

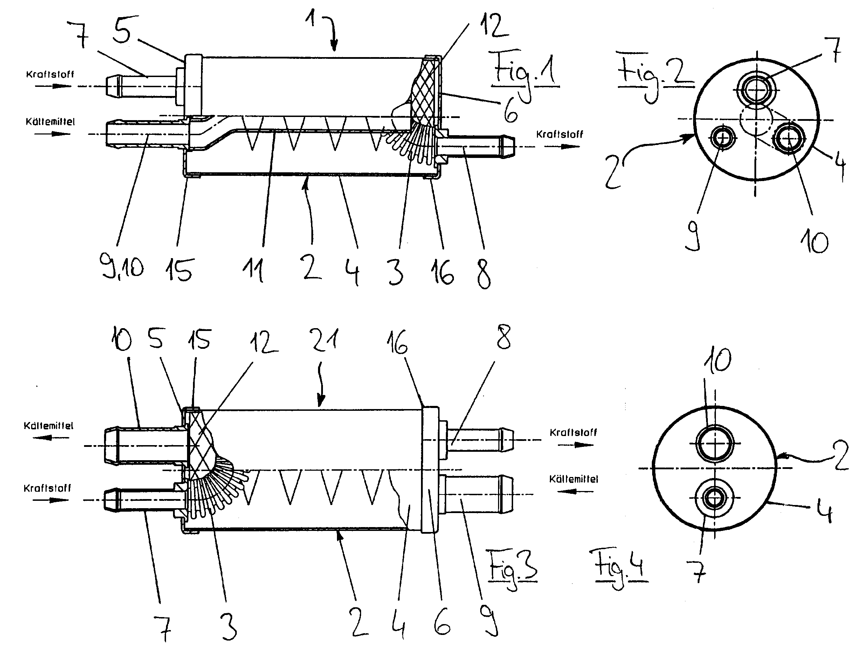

In Figur 1 ist ein Kraftstoffkühler 1 dargestellt, der aus einem im wesentlichen zylindrischen Gehäuse 2 und einem innerhalb des Gehäuses 2 wendelförmig verlaufenden Wellschlauch 3 zur Durchleitung des zweiten Mediums, im vorliegenden Fall des zu kühlenden Kraftstoffes besteht. Das Gehäuse 2 ist aus einem rohrförmigen Grundkörper 4 sowie zwei an den Enden des Grundkörpers aufgesteckten scheibenförmigen Deckeln 5, 6 aufgebaut, wobei die die Stirnseiten des Gehäuses bildenden Deckel mit zwei Anschlüssen 7, 8 für den Kraftstoff und zwei Anschlüssen 9, 10 für das erste Medium, im vorliegenden Fall das Kühlmittel versehen sind. Die Deckel weisen in ihrer Radialrichtung eine sich parallel zum Gehäuse erstreckende und dieses teilweise überlappende Außenform 15, 16 auf, die zusammen mit dem Gehäuse einen Festlegungsbereich bildet. Dieses Festlegen muß in mediendichter Weise erfolgen - beispielsweise durch WIG- oder Laserschweißen oder Löten.

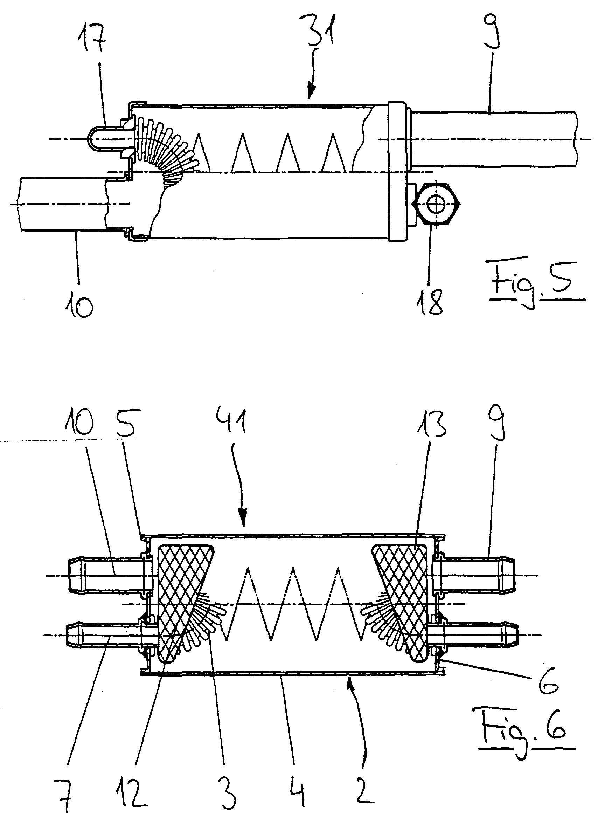

An den Kühlmittelanschluß 9, durch den das Kühlmittel in den Kühler fließt, ist ein Innenrohr 11 angefügt, das den Einströmbereich des Kühlmittels auf die gegenüberliegende Kühlerseite verlegt. Hierdurch ist es möglich, den Austrittsbereich des Kältemittels ― wie aus Figur 2 ersichtlich ― auf dieselbe Seite wie den Eintrittsbereich zu verlegen. Um hierbei nicht mit dem wendelförmig verlegten Wellschlauch zu kollidieren, ist das Innenrohr ausgehend von dem außermittig angeordneten Kühlmittelanschluß 9 in Richtung der Gehäuseachse abgewinkelt und verläuft in Richtung der Gehäuseachse durch die Kraftstoffwendel auf die gegenüberliegende Seite. Dort ist im Austrittsbereich, in dem das Kühlmittel das Innenrohr 11 verläßt, ein Diffusor 12 angeordnet, welcher für eine optimale Verwirbelung des Kühlmittels sorgt und damit die Tauscherleistung weiter erhöht.

In Figur 1 läßt sich insbesondere aus dem geschnittenen unteren Bereich noch das erfindungswesentliche Merkmal entnehmen, daß das Gehäuse über die axiale Länge derart gleichbleibend ausgeführt ist, daß es bei Bedarf problemlos verkürzt werden kann unter Verwendung derselben Deckel, die dann lediglich im Ablängungsbereich festgelegt werden müßten. Im Gegenzug dazu muß dann auch die Innenrohr- und Wellschlauchlänge an die neue Gehäuselänge angepaßt werden.

In den Figuren 3 und 4 ist eine alternative Bauform eines Kühlers 21 dargestellt, bei der gleiche Bauteile mit den gleichen Bezugszeichen wie schon bei den Figuren 1 und 2 versehen sind. Der einzige Unterschied zu der vorstehend erwähnten Bauform liegt darin, daß nunmehr an beiden Stirnseiten jeweils ein Kraftstoff- und ein Kühlmittelanschluß vorgesehen ist, also auf das Innenrohr 11 aus Figur 1 verzichtet werden kann.

In Figur 5 ist eine alternative Bauform eines Kühlers 31 dargestellt, bei der als Unterschied zu den Bauformen aus den Figuren 1 bis 4 abgewinkelte Kraftstoffanschlüsse 17 und 18 vorgesehen sind, die ein Zu- und Abströmen des Kraftstoffes in Radialrichtung gegenüber dem Kühler erzeugen. Im übrigen entsprechen die hierbei verwendeten Bauteile denjenigen aus den Figuren 1 bis 4.

Schließlich ist in Figur 6 noch ein Kraftstoffkühler 41 im Axialschnitt dargestellt, der wiederum pro Stirnseite jeweils einen Anschluß für Kühlmittel und einen Anschluß für Kraftstoff vorsieht, wobei die Besonderheit dieser Bauform nun darin liegt, daß die Anschlüsse für die gleichen Medien zueinander fluchtend auf den gegenüberliegenden Stirnseiten angeordnet sind, während bei den Bauformen aus den Figuren 3 bis 5 eine versetzte Anschlußweise vorgesehen ist. Schließlich ist aus Figur 6 auch noch eine mögliche Form eines Diffusors 12 bzw. 13 ersichtlich, der jeweils im Zutritts- und im Austrittsbereich des Kühlmittels auf der Innenseite des Kühlergehäuses 2 angeordnet ist, um hierdurch den gleichen Kühler auch in umgedrehter Richtung einbauen zu können. Zwar verbessert der im jeweiligen Austrittsbereich angeordnete Diffusor nicht das Strömungsverhalten oder trägt sonst zur Vergrößerung der Tauscherleistung bei; jedoch verursacht er auch keine negative Beeinträchtigung des Strömungsverhaltens, so daß sein Einbau im Hinblick auf die hierdurch erreichte Verwechslungssicherheit von Vorteil ist.

Zusammenfassend liegt der Vorteil der vorliegenden Erfindung darin, daß ein Kühler mit vereinfachtem Aufbau und ebenfalls in einfacher Weise skalierbarer Tauscherleistung zur Verfügung gestellt wird, bei dem die alle Anschlüsse anstatt in der gewölbten Umfangswandung stirnseitig und in Axialrichtung verlaufend angeordnet sind, wodurch die Umfangswandung frei von Anschlüssen bleibt und demgemäß einfach ausgeführt und in der Länge variiert werden kann.

## Patentansprüche

1. Kühler für Kraftfahrzeuge und insbesondere für den von einem Tank zu einer Verbrennungskraftmaschine und zurück strömenden Kraftstoff, bestehend aus einem im wesentlichen zylindrischen Gehäuse, das von einem ersten Medium im wesentlichen axial durchströmt wird, während ein zweites Medium über zwei separate Anschlüsse einen im Gehäuse verlegten Wellschlauch durchströmt, der als Wendel ausgebildet ist, deren Achse mit der Gehäuseachse übereinstimmt,
dadurch gekennzeichnet,
daß die Anschlüsse (7, 8, 17, 18) des Wellschlauches (3) in einer oder beiden axialen Stirnseiten (5, 6) des Gehäuses (2) angeordnet sind, daß die Stirnseiten des Gehäuses (2) von jeweils einem am Gehäuse festlegbaren Deckel (5, 6) gebildet sind, und daß die Deckel die Anschlüsse (7, 8, 9, 10) für Kraftstoff und Kühlmittel tragen.

2. Kühler nach Anspruch 1,
dadurch gekennzeichnet,
daß der eine Wellschlauchanschluß (7) an der einen axialen Stirnseite (5) und der zweite Wellschlauchanschluß (8) an der gegenüberliegenden zweiten axialen Stirnseite (6) angeordnet ist.

3. Kühler nach zumindest einem der vorstehenden Ansprüche,
dadurch gekennzeichnet,
daß die Wellschlauchanschlüsse (7, 8) beabstandet zur Wendel- und Gehäuseachse angeordnet sind.

4. Kühler nach zumindest einem der vorstehenden Ansprüche,
dadurch gekennzeichnet,
daß die Anschlüsse (9, 10) für das erste Medium an den axialen Stirnseiten (5, 6) des Gehäuses (2) und insbesondere beabstandet zur Gehäuseachse angeordnet sind.

5. Kühler nach zumindest einem der vorstehenden Ansprüche,
dadurch gekennzeichnet,
daß das zylindrische Gehäuse (2) aus einem rohrförmigen Grundkörper (4) besteht.

6. Kühler nach zumindest einem der vorstehenden Ansprüche,
dadurch gekennzeichnet,
daß die Deckel (5, 6) einen senkrecht zur Gehäuseachse in Radialrichtung verlaufenden insbesondere scheibenförmigen Innenbereich sowie eine an den rohrförmigen Grundkörper (4) angepaßte und insbesondere das Gehäuse unter Bildung eines Festlegungsbereiches überlappende Außenform (15, 16) aufweist.

7. Kühler nach zumindest einem der vorstehenden Ansprüche,
dadurch gekennzeichnet,
daß die Tauscherleistung des Kühlers (1, 21, 31, 41) durch Änderung der Wellschlauch- und Gehäuselänge variierbar ist.

8. Kühler nach zumindest Anspruch 7,
dadurch gekennzeichnet,
daß die Außenform des Gehäuses (2) über die axiale Länge zumindest in vorgegebenen Ablängungsbereichen im wesentlichen gleichbleibend ausgeführt ist, so daß das Gehäuse unabhängig von seiner axialen Länge durch einen an das Gehäuse angepaßten Deckel (5, 6) mediendicht insbesondere durch Verschweißen oder Verlöten von Gehäuse und Deckel im Festlegungsbereich verschließbar ist.

9. Kühler nach zumindest einem der vorstehenden Ansprüche,
dadurch gekennzeichnet,
daß im Übergangsbereich zwischen Anschluß (9, 10) für das erste Medium und Gehäuse zur Verringerung des Druckverlustes ein Diffusor (12, 13) angeordnet ist.

10. Kraftstoffkühler nach Anspruch 9,
dadurch gekennzeichnet,
daß der Diffusor (12, 13) aus einem Drahtformteil und insbesondere aus einem Gestricke besteht.

11. Kühler nach zumindest Anspruch 10,
dadurch gekennzeichnet,
daß der Diffusor (12, 13) im Bereich des Anschlusses (9, 10) der Kühlmittelleitung an das Gehäuse (2) innerhalb des Gehäuses angeordnet ist.

12. Kühler nach zumindest Anspruch 10,
dadurch gekennzeichnet,
daß der Diffusor (12, 13) in seiner Außenform in etwa dem Querschnitt des Anschlusses (9, 10) für das erste Medium entspricht.

13. Kühler nach zumindest Anspruch 10,
dadurch gekennzeichnet,
daß der Diffusor (12, 13) in seiner Außenform in etwa an den Querschnitt des Gehäuses (2) angepaßt ist.

14. Kühler nach zumindest einem der vorstehenden Ansprüche,
dadurch gekennzeichnet,
daß der Kühler ein Kraftstoffkühler ist, und daß eines der beiden Medien des Kraftstoff und das andere der beiden Medien ein Kühlmittel ist.

15. Kühler nach Anspruch 14,
dadurch gekennzeichnet,
daß das erste Medium ein Kühlmittel und das zweite Medium der Kraftstoff ist.

16. Kühler nach zumindest einem der vorstehenden Ansprüche,
dadurch gekennzeichnet,
daß der Kühler in eine Abgasrückführungsleitung eingebaut ist und zum Kühlen von Abgas dient.

17. Kühler nach zumindest einem der vorstehenden Ansprüche,
dadurch gekennzeichnet,
daß an den Anschluß (9) für das erste Medium ein in Richtung der Gehäuseachse und insbesondere durch die Wellschlauchwendel (3) verlaufendes Innenrohr (11) angeschlossen und durch das Innenrohr der Eintrittsbereich für das erste Medium auf die gegenüberliegende Gehäuseseite verlegt ist.
